# EUROPEAN PATENT APPLICATION

(11) **EP 4 279 212 A1**
(43) Date of publication of application: **22.11.2023**
(21) Application number: 23174125.7
(22) Date of filing: 17.05.2023
(51) Int. Cl.: B23Q 11/00

(54) **WORKING GROUP COMPRISING A WORKING TOOL FOR WORKING A PIECE AND A SUCTION HOOD FOR REMOVING MACHINING CHIPS**

(30) Priority: 18.05.2022 IT 202200010343
(71) Applicant: SCM Group S.p.A., 47921 Rimini (RN) (IT)
(72) Inventor: GIGLIOTTI, Fabrizio, 47921 RIMINI (RN) (IT); SEBASTIANI, Giovanni, 47921 RIMINI (RN) (IT); PENTITI, Federico, 47921 RIMINI (RN) (IT)
(74) Representative: Tiburzi, Andrea

(57) **Abstract**

The present invention relates to a working group (1) to be installed on a working head (WH) of a machining center (MC).

Said working group comprises a working tool (2) for working a piece (P) configured to rotate around a rotation axis (A), so that the rotation of said working tool (2) on a surface (S) of said piece (P) creates machining chips (F), and a suction hood (3) for removing said machining chips (F), provided with an inlet opening (31) to allow a quantity of machining chips (F) to enter the suction hood (3).

The suction hood (3) comprises at least one groove (33) to receive a further quantity of machining chips (F).

## Description

The present invention relates to a working group comprising a working tool for working a piece and a suction hood for removing machining chips.

### Field of invention

The working group object of the invention can be installed on an electrospindle of a machining head of a machining center.

Particularly, the present invention relates to the structure of said working group designed to reduce the number of machining chips (created during the machining of said piece through said working tool) that ca be exit from an opening of the machining center during machining of the piece, although a plurality of strips covers said opening to prevent said machining chips from escaping.

More specifically, the structure of the suction hood of the working group allows a quantity of machining chips to be channeled inside it to be sucked in and a further quantity of machining chips to be channeled into one or more grooves of which said suction hood is provided with.

### Prior Art

A machining center comprises a working head for working a piece.

The working head comprises an electrospindle and a working group.

The electrospindle has an end portion shaped to be coupled with the working group.

The working group comprises a working tool for working a piece, such as a panel of wood panel other material, and a suction hood for removing machining chips by suction.

The machining chips are created during the machining of the piece through said working tool.

The suction hood is provided with an inlet opening and an outlet opening.

The inlet opening allows the machining chips to enter inside the suction hood and the outlet opening allows the machining chips to exit the suction hood to be sucked, when a suction device is connected to said outlet opening and is in use.

A tube (preferably a hose) is used to connect the outlet opening of the suction hood to the suction device.

In other words, when the suction device is in use, the machining chips enter the suction hood, through the inlet opening, exit the suction hood, through the outlet opening, and enter the tube connecting the outlet opening to the suction device.

Returning to the machining center, said machining center is sliding on a working table.

The workpieces are positioned on the working table.

When a workpiece is on the working table, the machining center moves along said working table (through two guiding element, each of which is arranged on a respective side of said working table) until at least the part of said workpiece is inside said machining centre.

In this way, the working head of the machining center is capable of working said part of said piece.

Furthermore, the machining center has an opening to allow said workpiece to pass through the machining center itself.

A plurality of strips closes the opening of the machining center.

The strips of said plurality of strips serve to prevent the machining chips, created during the machining of the piece, from exiting the machining center through its opening.

In fact, when a working tool is in use on a workpiece, such as a wooden panel, the contact between the working tool and the workpiece creates a plurality of machining chips and the machining chips of said plurality of machining chips move away from said workpiece with a high speed.

This speed can reach 70 meters per second.

Although a quantity of machining chips enters the suction hood and is sucked in by the suction device, the number of machining chips that can exit the machining center through its opening is large.

This is due to the fact that the speed with which the machining chips hit the strips is such as to lift said strips.

Consequently, a disadvantage of said machining chips is given by the fact that a quantity of machining chips is capable of lifting the strips and exiting the machining center, through its opening, with the risk of hitting an operator near the machining center and injure him.

### Aim of the invention

Aim of the present invention is to overcome said disadvantage, providing a working group, to be installed on a working head of a machining center, wherein said working group comprises a working tool for working a piece and a suction hood for removing machining chips and the structure of said working group is designed to significantly reduce the number of machining chips which can exit from an opening of said machining center during the machining of a piece.

A further aim of the invention is to provide a working group which guarantees greater cleanliness inside the machining center during the machining of a piece, so that the quality of the machining is higher than in a machining center comprising a working group of known type, and that productivity is higher than in a machining center comprising a working group of known type since the number of times it is necessary to stop the machining center for cleaning is reduced.

### Object of the invention

It is object of the invention a working group, to be installed on a working head of a machining center, wherein said working group comprises:
- a working tool for working a piece, wherein said working tool has a rotation axis and is configured to rotate around said rotation axis, so that the rotation of said working tool on a surface of said piece creates machining chips, and
- a suction hood for removing machining chips, wherein said suction hood is provided with an inlet opening to allow a quantity of machining chips to enter the suction hood.

Said suction hood comprises at least a groove to receive a further quantity of machining chips, so that said machining chips of said further quantity of machining chips enter said groove along an inlet direction, the velocity of said machining chips of said further quantity of machining chips is slower than the velocity at which said machining chips enter said groove, and that machining chips of said further quantity of machining chips fall along an exit direction different from said inlet direction.

Furthermore, said suction hood can comprise a deflector and said deflector can comprise a base surface arranged in such a way as to face said surface of said piece, wherein said base surface comprises a first end portion, and said inlet opening is a space between said first end portion of said base surface and said working tool.

With reference to the groove, said groove can be positioned on said base surface.

Moreover, in longitudinal section, said groove can be inclined with respect to said base surface and form with said base surface a first angle greater than 0° and less than di 90°, preferably between 15° and 90°.

The deflector can comprise a first part and said first part can comprise a surface which is inclined with respect to said base surface and form with said base surface an angle, wherein said angle is preferably equal to said first angle.

Returning to the groove, said groove can comprise a surface shaped in such a way that in cross section a reference plane crosses said groove and intercept at least a first point of said surface at a first end of said groove and a second point of said surface at a second end of said groove, and that a straight line passing through said first point and said second point and positioned on said reference plane forms a second angle with an axis, parallel to the rotation axis of the working tool and passing through said firs point and positioned on said reference plane.

Said second angle can be between 15° and 40° and preferably equal to 20°.

Furthermore, said groove can comprise a first side end portion and a second side end portion, opposite to said first side end portion.

In a first alternative, said suction hood can comprise a casing which covers said first side end portion and said second side end portion of said groove.

In a second alternative, said suction hood comprises a casing which comprise a first recess at said first side end portion of said groove and/or a second recess at said second side end portion of said groove.

Advantageously, said suction hood can comprise a plurality of groove.

With reference to the working group and the working tool, said working group can be movable along a rectilinear trajectory in a first forward direction and said working tool can be configured to rotate around said rotation axis in a first rotation direction.

Particularly, said working tool can be a hogger.

The present invention also relates to a working head comprising a working group mentioned above, as well as a machining center comprising a working unit, wherein said working unit comprises said working head.

### Figure List

The present invention will be now described, for illustrative, but not limitative purposes, according to its embodiment, making particular reference to the enclosed figures, wherein:
Figure 1 is a schematic view of a machining center during the machining of a panel;
Figure 2 is a first view of the machining center from which a part has been removed to show a working group for working the panel, object of the invention;
Figure 3 is a second view of the machining center from which a part has been removed to show the working group for working the panel, object of the invention;
Figure 4 shows a detail of the machining center of Figure 3 with reference to the portion of the machining center in which the working group is positioned;
Figure 5 is a first perspective view of the working group, object of the invention, comprising a working tool and a suction hood;
Figure 6 is a second perspective view of the working group object of the invention,
Figure 7 is a third perspective view of the working group object of the invention,
Figure 8 is a fourth perspective view of the working group object of the invention,
Figure 9 is a first view of the defector of the suction hood of the working group;
Figure 10 is a second view of the defector of the suction hood of the working group;
Figure 11 is a first perspective view of the working group in use on a surface of a wood panel;
Figure 12 is a second perspective view of the working group in use
Figure 13 is a first front view of the working group in use to show a first angle formed by each groove with respect to a base surface of the suction hood;
Figure 14A is a second front view of the working group in use, in which a reference plane cuts transversely each groove of the suction hood;
Figure 14B shows a second angle formed by a straight line passing through two end points of the surface of a groove of the suction hood and an axis parallel to a rotation axis of said working tool and passing through one of said end points, wherein said second angle is disposed on said reference plane.

### Detailed description of the invention

With reference to Figures, a working group 1 for working a piece P, to be installed on a working head WH of a machining center MC.

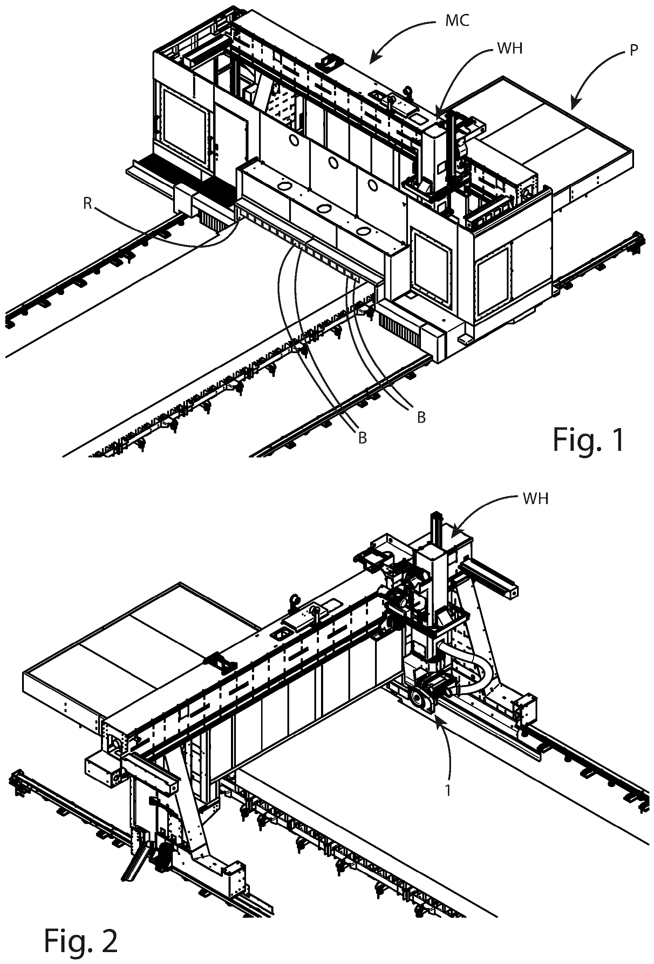

Particularly, Figure 1 shows a machining center MC in use.

The machining center MC comprises a working head WM for working a piece.

Furthermore, the machining center MC has an opening R to allow the passage of a piece P to be worked through the machining center itself.

Said opening R is covered by a plurality of strips B.

In Figure 1 the strips B of said plurality of strips B are partially visible due to the presence of the workpiece P

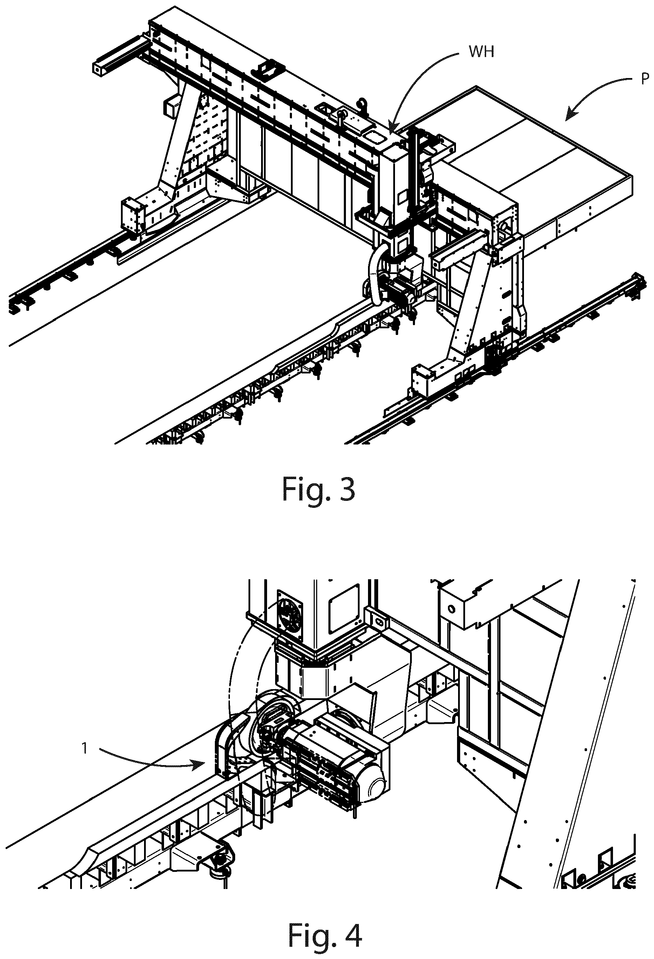

Figures 2, 3 and 4 show the position of the working group 1, object of the invention, inside the machining center MC.

In the embodiment being disclosed, said piece P is a wooden panel.

However, said piece P can be a panel can be a panel made of any material other than wood, without departing from the scope of the invention.

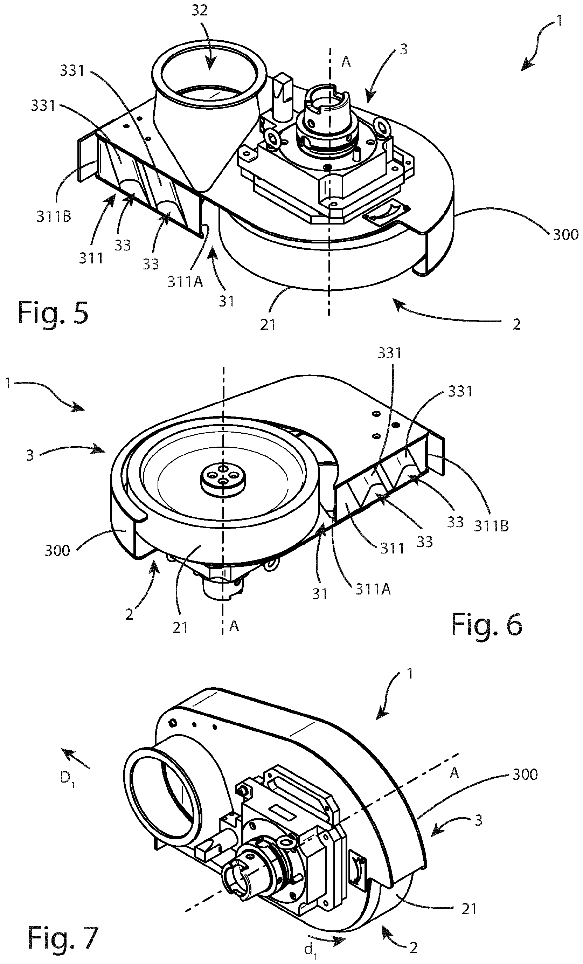

Figures 5, 6, 7, 8 show the working group object of the invention.

Said working group 1 comprises:
- a working tool 2 for working a piece P, wherein said working tool 2 has a rotation axis A and is configured to rotate around said rotation axis A, so that the rotation of said working tool 2 on a surface S of said piece P creates machining chips F, and
- a suction hood 3 for removing machining chips F, wherein said suction hood 3 is provided with an inlet opening 31 to allow a quantity of machining chips F to enter the suction hood 3,

Said suction hood 3 comprises at least a groove 33 to receive a further quantity of machining chips F, so that said machining chips F of said further quantity of machining chips F enter said groove 33 along an inlet direction, the velocity of said machining chips F of said further quantity of machining chips F is slower than the velocity at which said machining chips F enter said groove 33, and that machining chips F of said further quantity of machining chips F fall along an exit direction different from said inlet direction.

Particularly, the machining chips F enter the groove 33 through said inlet opening 31 and move inside said groove 33 before falling along an outlet direction different from the inlet direction.

The inlet direction is substantially perpendicular to the rotation axis A of the rotating tool 2.

Particularly, the inlet direction is substantially opposite to the forward direction of the working group (i.e. first forward direction) mentioned below.

The exit direction can substantially be perpendicular to the inlet direction.

In the embodiment being disclosed, the exit direction follows the second angle β described later.

With reference to the working group 1, said working group 1 is movable along a rectilinear trajectory in a first forward direction D₁

With reference to the working tool 2, said working tool 2 is a rotating working tool.

Particularly, said working tool 2 is configured to rotate around said rotation axis A in a first rotation direction d₁.

Furthermore, said working tool 2 comprises a working surface 21 for working the surface S of said piece P.

In the embodiment being disclosed, said working tool 2 is a hogger.

With reference to the suction hood 3, as said, said suction hood 3 comprises an inlet opening 31, through which a quantity of machining chips F enters the suction hood 3 (to be sucked in) and at least one groove 33 for receiving a further quantity of machining chips F.

The suction hood 3 further comprises an outlet opening 32 to allow the quantity of machining chips F that enters the suction hood 3 through the inlet opening 31 to exit from the suction hood 3.

Advantageously, the groove 33 allows a further quantity of machining chips F to be channeled with respect to a known type working group provided with a suction hood without a groove.

Consequently, the number of machining chips capable of lifting the strips B of the machining center MC and exiting said machining center MC during the machining of a piece P is significantly reduced.

In the embodiment being disclosed, said suction hood 3 comrpises two grooves 33.

However, the suction hood 3 can comprise any number of grooves, without departing from the scope of the invention.

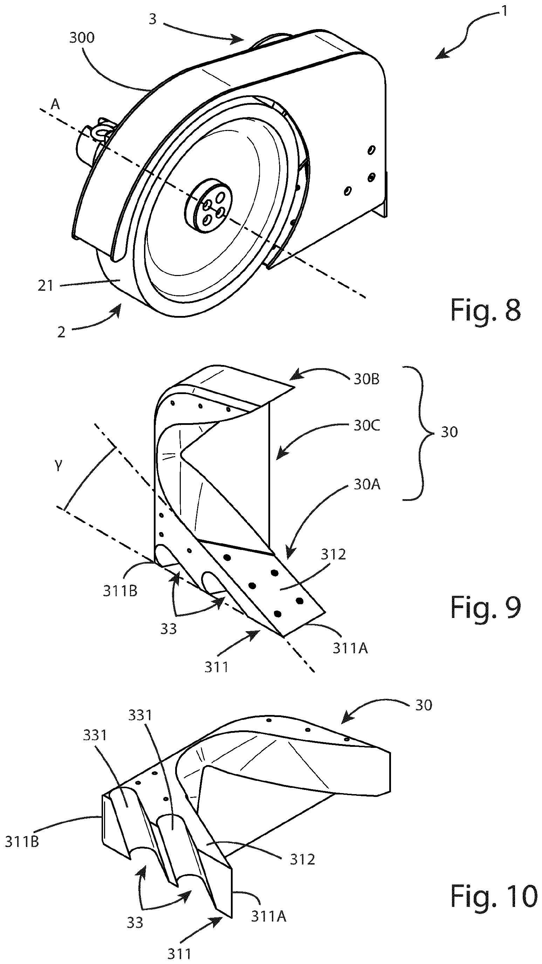

With particular reference to the structure of the suction hood 3, said suction hood 3 comprises a casing 300 and a deflector 30 (shown in detail in Figures 9 and 10), arranged inside said casing 300.

The casing 300 is sized and shaped to partially cover the working tool 2 in such a way that a portion of the working surface 21 of said working tool 2 is uncovered.

Each groove 33 comprises a first side end portion and a second side end portion, opposite to said first side end portion.

In a first alternative, as shown in Figures from 5 to 8, the casing 300 covers said first side end portion and said second side end portion of each groove 33.

In said first alternative, the machining chips F of the further quantity of the machining chips F exit from each groove 33 in a downward exit direction.

In a second alternative, the casing 300 can comprise a respective first recess at the first side end portion of each groove 33 and/or a respective second recess at the second side end portion of each groove 33.

In said second alternative, the machining chips of the further quantity of machining chips F exit from each groove 33 through the first side end portion and/or the second side end portion in a side exit direction.

As shown in Figures 9 and 10, the deflector 30 comprises a base surface 311.

The base surface 30 is delimited by a first end portion 311A and by a second end portion 311B.

La superficie di base 311 del deflettore 30 è disposta in modo tale da essere affacciata alla superficie S del pezzo P.

The base surface 311 of the deflector 30 is arranged in such a way as to face said surface S of said piece P.

In particular, when the surface S of said piece P has been machined by said working tool 2, the base surface 311 of the deflector is spaced from said surface S.

Each groove 33 is positioned on said base surface 311.

The deflector 30 further comprises a first part 30A, which comprises said base surface 311, and a second part 30B.

Said first part 30A and said second part 30B are shaped in such a way as to substantially form a V.

Said first part 30A comprises a surface 312 which is inclined with respect to said base surface 311 and form with said base surface 311 an angle γ.

The deflector 30 further comprises a third part 30C which contacts at least partially a side surface of said first part 30A and a side surface of said second part 30B.

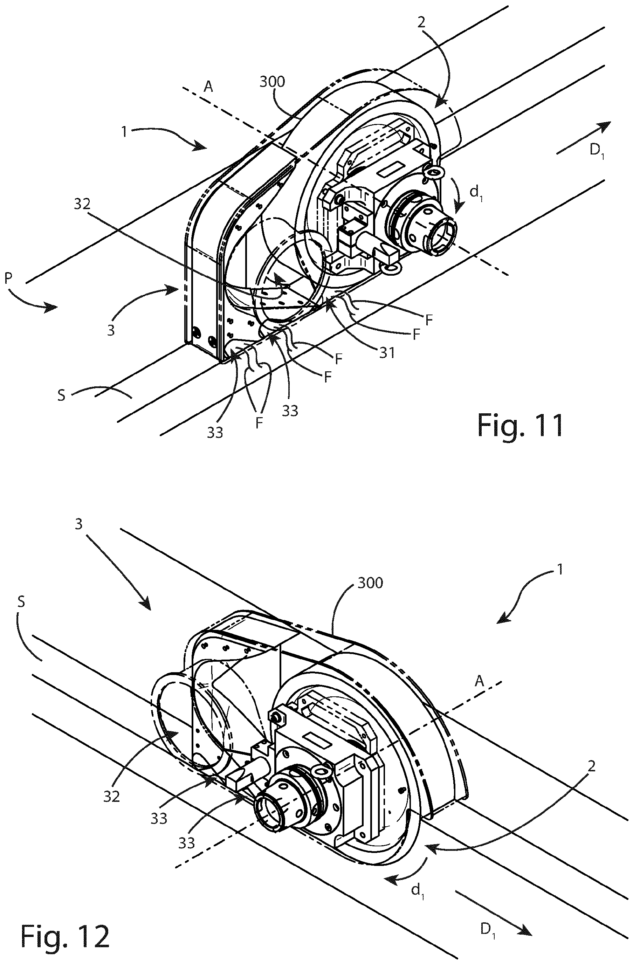

Figures 11, 12, 13, 14A show the working group 1, object of the invention, during the machining of a surface S of the piece P which is a wooden panel.

Figures show the working group 1 moving on the surface S of the piece P along a first forward direction D₁ and the working tool 2 rotates around its rotation axis A in a first rotation direction d₁.

In the specific case, said first rotation direction d₁ is a clockwise rotation direction.

A quantity of machining chips F enter the inlet opening 31 of the suction hood 3 and a respective further quantity of machining chips F enter each groove 33.

The inlet opening 31 of the suction hood 3 is a space between the first end portion 310 of the base surface 311 and said the working tool 2.

In other words, the deflector 30 is spaced from the working tool 2, so that a compartment is created inside the casing 300 with an opening facing the working tool 2.

The outlet opening 32 is positioned on a surface of said compartment.

The quantity of machining chips F enters said compartment, through the inlet opening 31, and is sucked in by a suction device (not shown) connected to the outlet opening 32.

In longitudinal section each groove 33 is inclined with respect to the base surface 311 of the deflector and forms with said base surface 311 a first angle α greater than 0° and less than di 90°

It is preferably that said first angle is between 15° and 90°.

In the embodiment being disclosed, said first angle α is equal to 30°.

In the embodiment being disclosed, the angle γ between the surface 312 and the base surface 311 of the deflector 30 is equal to said first angle α.

However, said angle γ can be different from said first angle α, without departing from the scope of the invention.

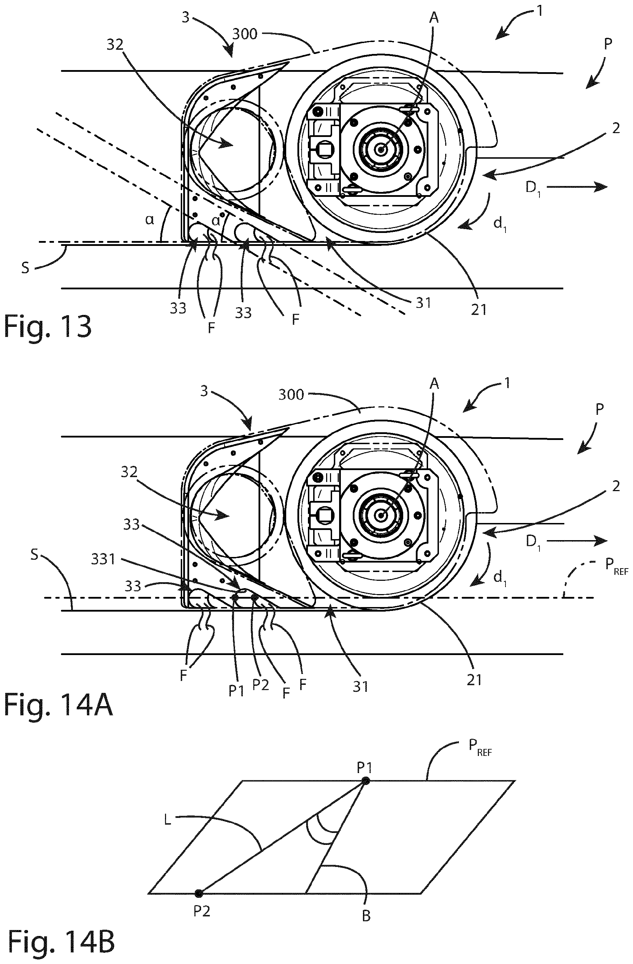

Furthermore, with particular reference to the Figures 14A and 14B, each groove 33 comprises a surface 331 shaped in such a way that in cross section a reference plane P_{REF} crosses said groove 33 and intercepts at least a first point P1 of said surface 331 at a first end of said groove 33 and a second point P2 of said surface 331 at a second end of said groove 33, and that a straight line L passing through said first point P1 and said second point P2 and positioned on said reference plane P_{REF} forms a second angle β with an axis B, parallel to the rotation axis A of the working tool 2 and passing through said first point P1 and positioned on said reference plane P_{REF}.

Said second angle β Is between 15° and 40°.

In the embodiment being disclosed, said second angle β is equal to 20°.

Figure 14B show said second angle β positioned on said reference plane P_{REF}.

The present invention also relates to a working head WH comprising a working group 1 mentioned above.

Furthermore, the present invention also relates to a machining center MC comprising a working unit, wherein said working unit comprises a working head WH.

### Advantages

Advantageously, through the working group, object of the present invention, it is possible to reduce the number of machining chips F which can exit from the machining center MC during the machining of a surface S of a piece P.

In fact, not only is a quantity of machining scraps F channeled inside the suction hood 3 (through the inlet opening 31) to be sucked in, but a further quantity of machining scraps F is channeled inside a or more grooves 33, arranged in the suction hood 3, along an inlet direction.

Thanks to said one or more grooves, the speed of the machining scraps F of said further quantity of machining scraps F is slowed down with respect to the speed with which the same machining scraps F enter said one or more grooves, and said machining scraps F move inside said one or more grooves 33 before falling along an exit direction different from said entry direction.

A further advantage is given by the fact that through the working group of the invention it is possible to obtain greater cleanliness inside the machining center during the machining of a piece, so as to increase productivity and reduce the number of cleaning interventions of the machining center that require the machining center to be stopped.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Working group (1), to be installed on a working head (WH) of machining center (MC), wherein said working group (1) comprises:
- a working tool (2) for working a piece (P), wherein said working tool (2) has a rotation axis (A) and is configured to rotate around said rotation axis (A), so that the rotation of said working tool (2) on a surface (S) of said piece (P) creates machining chips (F), and
- a suction hood (3) for removing machining chips (F), wherein said suction hood (3) is provided with an inlet opening (31) to allow a quantity of machining chips (F) to enter the suction hood (3),
**characterized in that**
said suction hood (3) comprises at least a groove (33) to receive a further quantity of machining chips (F), so that said machining chips (F) of said further quantity of machining chips (F) enter said groove (33) along an inlet direction, the velocity of said machining chips (F) of said further quantity of machining chips (F) is slower than the velocity at which said machining chips (F) enter said groove (33), and that machining chips (F) of said further quantity of machining chips (F) fall along an exit direction different from said inlet direction.

2. Working group (1) according to the previous claim, wherein
said suction hood (3) comprises a deflector (30) and said deflector comprises a base surface (311) arranged in such a way as to face said surface (S) of said piece (P), said base surface (311) comprising a first end portion (311A), and
wherein
said inlet opening (31) is a space between said first end portion (310) of said base surface (311) and said working tool (2).

3. Working group (1) according to the previous claim, wherein said groove (33) is positioned on said base surface (311).

4. Working group (1) according to the previous claim, wherein in longitudinal section said groove (33) is inclined with respect to said base surface (311) and forms with said base surface (311) a first angle (α) greater than 0° and less than di 90°, preferably between 15° and 90°.

5. Working group (1) according to the previous claim, wherein said deflector (3) comprises a first part (30A) and said first part (30A) comprises a surface (312) being inclined with respect to said base surface (311) and forms with base surface (311) an angle (γ), said angle (γ) being preferably equal to said first angle (α).

6. Working group (1) according to any one of the previous claims, wherein
said groove (33) comprises a surface (331) shaped in such a way that in cross section a reference plane (P_{REF}) crosses said groove (33) and intercepts at least a first point (P1) of said surface (331) at a first end of said groove (33) and a second point (P2) of said surface (331) at a second end of said groove (33), and that a straight line (L) passing through said first point (P1) and said second point (P2) and positioned on said reference plane (P_{REF}) forms a second angle (β) with an axis (B), parallel to the rotation axis (A) of the working tool (2) and passing through said first point (P1) and positioned on said reference plane (P_{REF}),
wherein
said second angle (β) is between 15° and 40°, preferably equal to 20°.

7. Working group (1) according to any one of the claims 1-6, wherein
said groove (33) comprises a first side end portion and a second side end portion, opposite to said first side end portion, and wherein
said suction hood (3) comprises a casing (300) and said casing (300) covers said first side end portion and said second side end portion of said groove (33).

8. Working group (1) according to any one of the claims 1-6, wherein
said groove (33) comprises a first side end portion and a second side end portion, opposite to said first side end portion, and wherein
said suction hood (3) comprises a casing (300) and said casing (300) comprises a first recess at said first side end portion of said groove (33) and/or a second recess at said second side end portion of said groove (33).

9. Working group (1) according to any one of the previous claims, wherein said suction hood (3) comprising a plurality of grooves (33).

10. Working group (1) according to any one of the previous claims, wherein
said working group (1) is movable along a rectilinear trajectory in a first forward direction (D1) and said working tool (2) is configured to rotate around said rotation axis (A) in a first rotation direction (d1).

11. Working group (1) according to any one of the previous claims, wherein said working tool (2) is a hogger.

12. Working head (WH) comprising a working unit (1) according to any one of the previous claims.

13. Machining center (MC) comprising a working unit comprising the working head (WH) according to the previous claim.
